# EUROPÄISCHE PATENTSCHRIFT

(11) **EP 3 524 847 B1**
(45) Veröffentlichungstag und Bekanntmachung des Hinweises auf die Patenterteilung: **06.04.2022**
(21) Anmeldenummer: 19155699.2
(22) Anmeldetag: 06.02.2019
(51) Int. Cl.: H01F 7/08, H01F 7/128, F16F 9/46, F16K 31/06, F16K 27/04

(54) **MAGNETVENTIL UND VERFAHREN ZUR HERSTELLUNG EINES MAGNETVENTILS**
SOLENOID VALVE AND METHOD OF MANUFACTURING A SOLENOID VALVE
ÉLECTROVANNE ET MÉTHODE DE FABRICATION D'UNE ÉLECTROVANNE

(30) Priorität: 12.02.2018 DE 102018103046
(43) Veröffentlichungstag der Anmeldung: 14.08.2019
(73) Patentinhaber: RAPA Automotive GmbH & Co. KG, 95100 Selb (DE)
(72) Erfinder: BÄHR, Sebastian, 95100 Selb (DE); KLÖTZER, Martin, 95100 Selb (DE)
(74) Vertreter: Klunker IP Patentanwälte PartG mbB

(56) Entgegenhaltungen:
- DE-A1-102008 008 735
- DE-A1-102011 078 104
- US-A- 5 011 113

## Beschreibung

Die vorliegende Erfindung betrifft einerseits ein Magnetventil und andererseits ein Verfahren zur Herstellung eines solchen Magnetventils, insbesondere zur Verwendung für elektrisch kontinuierlich verstellbare Stoßdämpfer eines Fahrzeugs.

Fahrzeuge, insbesondere Kraftfahrzeuge, weisen üblicherweise ein Fahrwerk auf, welches mehrere Stoßdämpfer, Federn, Radaufhängungen, Räder und eine Karosserie oder einen Rahmen umfasst. Jeweils ein Stoßdämpfer, auch Schwingungsdämpfer genannt, bildet zusammen mit jeweils einer Fahrzeugfeder ein Verbindungsglied zwischen einer Radaufhängung und der Karosserie des Fahrzeugs. Der Stoßdämpfer reduziert Schwingungen der Fahrzeugfeder, bremst diese ab und gleicht Fahrbahnunebenheiten aus. Dadurch können beim Fahren mit dem Fahrzeug die Fahrstabilität, der Fahrkomfort und die Fahrsicherheit erhöht werden.

Die Dämpfungscharakteristik eines Stoßdämpfers kann durch ein Magnetventil verändert werden. Dazu wird, je nach Stellung des Ventils, ein Durchlass für einen Ölfluss im Stoßdämpfer geweitet oder verengt, sodass eine kontinuierlich angepasste Abstimmung des Fahrwerks des Fahrzeugs ermöglicht wird.

Magnetventile weisen dazu in der Regel ein Ventilgehäuse mit einer zur Erzeugung eines elektromagnetischen Feldes elektrisch bestrombaren Spule auf. Zudem umfassen derartige Ventile üblicherweise einen sich entlang einer Längsachse der Spule beweglichen Magnetanker, welcher von einem Polrohr umgeben ist. Das Polrohr ist seinerseits zumindest teilweise von einem Spulenkörper der Spule umgeben und ist Teil eines magnetischen Kreises, um den Magnetanker in der dem Fachmann geläufigen Weise mittels der bestrombaren Spule axial zu verschieben, sodass die Stellung des Ventils und damit der Durchlass für den Ölfluss geregelt werden können. Ein Magnetventil mit einem bezüglich einer Längsachse einer Spule beweglich gelagerten Magnetanker wird beispielsweise in der Druckschrift DE 10 2011 078 104 A1 offenbart.

Da das Magnetventil typischerweise außen am Stoßdämpfer angeordnet ist und demzufolge Kontakt zur Atmosphäre aufweist, müssen außenliegende metallische Teile des Magnetventils entweder aus nichtrostendem Material gefertigt oder mit einer Beschichtung gegen Korrosion geschützt werden. Üblicherweise handelt es sich bei den außenliegenden metallischen Teilen um ein Endstück des Polrohrs, welches ein axiales Ende des Polrohrs umfasst, und eine an das Endstück des Polrohrs radial anschließende Magnetscheibe, die zusammen mit dem Polrohr Teil des Magnetkreises ist. Bekanntermaßen sind nichtkorrodierende Metallwerkstoffe mit guten magnetischen Eigenschaften im Vergleich zu korrodierenden Metallwerkstoffen mit guten magnetischen Eigenschaften deutlich teurer. Daher werden die Magnetscheibe und das mehrteilige Polrohr üblicherweise aus korrodierenden Metallwerkstoffen gefertigt, und bei der Herstellung eines derartigen Magnetventils werden die Oberflächen der genannten Teile mit einem Korrosionsschutz versehen.

Das Polrohr ist häufig mehrteilig ausgeführt und umfasst üblicherweise das Endstück sowie eine Hülse und eine Patrone. Bei der Fertigung und Montage des Magnetventils werden die Teile des Polrohrs miteinander verschweißt. Da das Schweißen von beschichteten Teilen schwierig bis unmöglich ist, wird die Oberfläche des mehrteiligen Polrohrs erst nach dem Schweißprozess beschichtet. Dadurch entsteht jedoch eine Unterbrechung im Montagefluss, d.h. beim Zusammenbau des Magnetventils, was wiederum eine Kostenerhöhung bei der Herstellung des Magnetventils zur Folge hat. Die Erhöhung der Kosten ist dabei beispielsweise auf Mehrkosten infolge der Zwischenlagerung zurückzuführen.

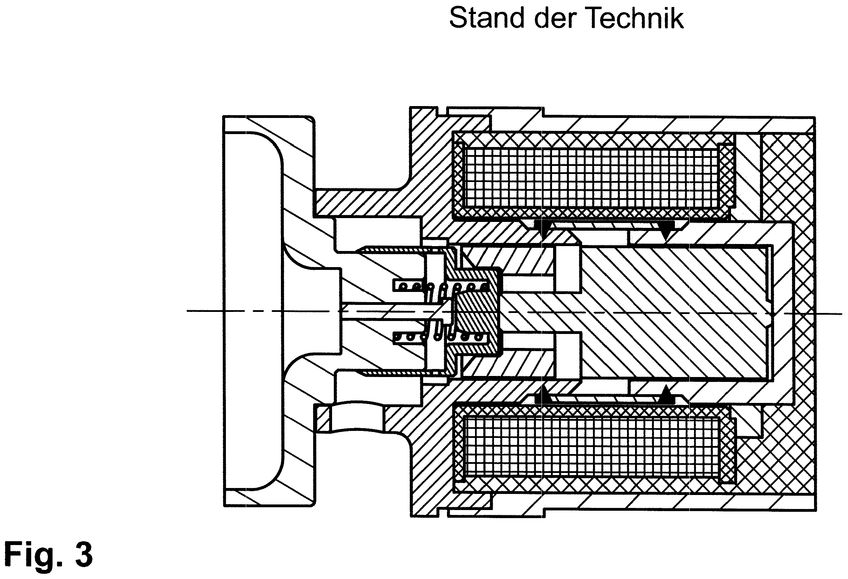

Gemäß einer Alternative werden, um das aus leicht korrodierendem Metallwerkstoff bestehende Polrohr einerseits beim späteren Einsatz des Magnetventils am Stoßdämpfer vor Korrosion zu schützen und andererseits den Montagefluss bei der Herstellung des Magnetventils nicht zu unterbrechen, sowohl das axiale Ende des Polrohrs als auch die Magnetscheibe zusammen mit der Spule mittels einer Vergussmasse im Ventilgehäuse vergossen. Ein derartiges Magnetventil gemäß dem Stand der Technik ist schematisch in Fig. 3 dargestellt.

Als problematisch hat sich jedoch herausgestellt, dass prozessbedingte Schwankungen im Hinblick auf eine Dicke der Vergussmasse, hervorgerufen durch Toleranzen beim Füllvorgang oder Schrumpfungseffekte beim Aushärten der Vergussmasse, eine Mindestdicke der Vergussmasse über dem axialen Ende des Polrohrs erfordern. Diese gewährleistet, dass die ausgehärtete Vergussmasse Betriebsbelastungen und Einsatzbedingungen des Magnetventils, wie Temperaturwechsel, Schwingungen und dergleichen, standhält. Diese Mindestdicke der Vergussmasse führt jedoch zu einer Erhöhung der Baugröße des Magnetventils.

Aufgabe der vorliegenden Erfindung ist es daher, einerseits ein einfaches und kostengünstiges Verfahren zur Herstellung eines kompakt gebauten Magnetventils, insbesondere für elektrisch kontinuierlich verstellbare Stoßdämpfer eines Fahrzeugs, bereitzustellen und andererseits ein entsprechend einfach und kostengünstig herstellbares Magnetventil bereitzustellen, welches kompakt gebaut ist.

Die Aufgabe wird einerseits durch ein Verfahren zur Herstellung eines Magnetventils und andererseits durch ein Magnetventil mit den Merkmalen des jeweils unabhängigen Anspruchs gelöst. Weiterbildungen und vorteilhafte Ausgestaltungen sind in den abhängigen Ansprüchen angegeben.

Ein Aspekt der Erfindung betrifft ein Magnetventil, insbesondere für elektrisch kontinuierlich verstellbare Stoßdämpfer eines Fahrzeugs, welches eine in einem Ventilgehäuse mittels einer Vergussmasse vergossene, elektrisch bestrombare Spule mit einem Spulenkörper und einer Längsachse aufweist. Das Magnetventil umfasst darüber hinaus einen bezüglich der Längsachse der Spule beweglich gelagerten Magnetanker, welcher zumindest teilweise von einem Polrohr umgeben ist. Das Polrohr selbst ist wiederum zumindest teilweise von dem Spulenkörper der Spule umgeben. Zudem ist ein axiales Ende des Polrohrs mit einer Korrosionsschutzkappe, welche mit der Vergussmasse verbunden ist, so abgedeckt, dass dieses Ende vor Korrosionseinflüssen aus der Atmosphäre geschützt ist.

Das der Erfindung zugrunde liegende Magnetventil ist einfach und kostengünstig herstellbar, da einerseits das Polrohr und die Magnetscheibe aus einem kostengünstigen magnetisierbaren Metallwerkstoff gefertigt werden können und andererseits ein kosten- und zeitintensiver Beschichtungsprozess der genannten Teile, insbesondere nach dem Verschweißen von Teilen des Polrohrs, entfällt, sodass eine unterbrechungsfreie Montage des Magnetventils gewährleistet ist. Zudem kann das erfindungsgemäße Magnetventil gegenüber einem gemäß dem Stand der Technik hergestellten Magnetventil, bei welchem die Spule, das axiale Ende des Polrohres sowie die Magnetscheibe mittels einer Vergussmasse vergossen werden, eine geringere Bauhöhe aufweisen. Dies ist möglich, da die das axiale Ende des Polrohrs abdeckende Korrosionsschutzkappe eine geringere Mindestdicke, d.h. Wandstärke, aufweisen kann, als die Vergussmasse des aus dem Stand der Technik bekannten Magnetventils am axialen Ende des Polrohrs, da die Korrosionsschutzkappe als separates Bauteil des Magnetventils durch bestimmte Verfahren exakt gefertigt werden kann. Demgegenüber unterliegt die Dicke der Vergussmasse des aus dem Stand der Technik bekannten Magnetventils prozessbedingten Schwankungen, hervorgerufen durch Toleranzen beim Füllvorgang oder Schrumpfungseffekte beim Aushärten der Vergussmasse, sodass die Vergussmasse eine bestimmte Dicke aufweisen muss, um zu gewährleisten, dass die ausgehärtete Vergussmasse Betriebsbelastungen und Einsatzbedingungen des Magnetventils, wie Temperaturwechsel, Schwingungen und dergleichen, standhält. Solche Beschränkungen gelten für eine separate Korrosionsschutzkappe nicht oder nur eingeschränkt.

In einer bevorzugten Ausführungsform erstreckt sich das mit der Korrosionsschutzkappe abgedeckte Ende des Polrohrs in axialer Richtung über die Vergussmasse hinaus. Demzufolge weist das Magnetventil vergleichsweise wenig Vergussmasse auf, sodass bezüglich der Vergussmasse Gewicht und Materialkosten reduziert werden.

Vorzugsweise erstreckt sich das mit der Korrosionsschutzkappe abgedeckte Ende des Polrohrs in axialer Richtung über eine axiale Außenkante des Ventilgehäuses hinaus. Besonders bevorzugt erstreckt sich das mit der Korrosionsschutzkappe abgedeckte Ende des Polrohres in axialer Richtung über alle axialen Außenkanten des Ventilgehäuses. Mit anderen Worten, eine axiale Bauhöhe des Ventilgehäuses kann in Abhängigkeit einer axialen Wandstärke der Vergussmasse reduziert werden, sofern das Ventilgehäuse seine Schutz- und Begrenzungsfunktion gegenüber der Vergussmasse noch erfüllt. Eine Reduzierung der axialen Bauhöhe des Ventilgehäuses führt zu Materialeinsparungen im Hinblick auf das Ventilgehäuse und darüber hinaus zu einer Verringerung der axialen Baugröße des Magnetventils. Besonders bevorzugt ist die Korrosionsschutzkappe aus Kunststoff gefertigt, insbesondere aus einem Kunststoff aus der Gruppe der Thermoplaste, Duroplaste und Elastomere. Vorzugsweise ist die Korrosionsschutzkappe ein Kunststoffspritzgussteil. Einerseits lassen sich Kunststoffspritzgussteile besonders kostengünstig in Serie herstellen und anderseits sind sie hinsichtlich ihrer Abmessungen besonders exakt herstellbar. Die Korrosionsschutzkappe kann daher eine Wandstärke von 1 mm oder weniger aufweisen, sodass die axiale Baugröße des Magnetventils gering ist.

In einer besonderen Ausführungsform werden der Spulenkörper und die Korrosionsschutzkappe sowie eine zwischen dem Spulenkörper und der Korrosionsschutzkappe befindliche Magnetscheibe untereinander zu einer Einheit vormontiert. Besonders bevorzugt umfasst der aus Kunststoff gefertigte Spulenkörper dazu ein oder mehrere Schnapphaken, welche durch Öffnungen im Magnetring hindurch an der Korrosionsschutzkappe angreifen (oder umgekehrt), so dass der Spulenkörper, die Magnetscheibe und die Korrosionsschutzkappe fest miteinander verbunden sind. Dadurch lässt sich das Magnetventil besonders einfach und zeitsparend vormontieren. Das Wickeln der Spule erfolgt dann auf der vormontierten Einheit. Insbesondere kann dabei sogleich eine elektrische Verbindung zwischen der Spule und einem Steckverbindungsanschluss des Magnetventils hergestellt werden, wenn - weiter vorteilhaft - dieser Steckverbindungsanschluss in die Korrosionsschutzkappe integriert ist. Dadurch kann die elektrische Verbindung vollständig mit der Vergussmasse vergossen und somit gegen Beschädigungen geschützt werden.

Gemäß einer besonderen Ausführungsform ist die Korrosionsschutzkappe gegenüber der Vergussmasse andersfarbig ausgestaltet. Besonders bevorzugt sind in einer Gruppe von Magnetventilen definierte Magnetventile jeweils mit einer Korrosionsschutzkappe mit definierter Farbe versehen, welche zur Kennzeichnung des jeweiligen Magnetventils beträgt. Dazu können sich die Farben der entsprechenden Korrosionsschutzkappen voneinander unterscheiden. Die Korrosionsschutzkappen können darüber hinaus oder alternativ unterschiedliche Zeichen, insbesondere Beschriftungen in Form von Buchstaben, Zahlen oder dergleichen, aufweisen. Die Zeichen können durch eine Laserbeschriftung, eine Prägung oder durch ein anderes dem Fachmann geläufiges Kennzeichnungsverfahren auf den Schutzkappen aufgebracht werden. Mit Hilfe der gekennzeichneten Korrosionsschutzkappen können die Magnetventile beispielsweise hinsichtlich ihrer Baugröße oder ihrer Leistung unterschieden werden, sodass beispielsweise eine schnellere und damit kostengünstigere Zuordnung hinsichtlich ihrer Verwendung erfolgen kann.

Ein weiterer Aspekt der Erfindung betrifft ein Verfahren zur Herstellung eines Magnetventils, insbesondere für elektrisch verstellbare Stoßdämpfer eines Fahrzeugs. In einem Verfahrensschritt werden ein Polrohr und eine Spule mit einem Spulenkörper axial in ein Ventilgehäuse eingeführt, wobei der Spulenkörper das Polrohr zumindest teilweise umgibt. Ein weiterer Schritt sieht vor, die Spule und den Spulenkörper mit einer Vergussmasse zu vergießen. In einem weiteren Schritt wird ein axiales Ende des Polrohrs mit einer Korrosionsschutzkappe derart abgedeckt, dass zwischen der Vergussmasse und der Korrosionsschutzkappe eine Verbindung hergestellt wird und das axiale Ende des Polrohrs vor Korrosionseinflüssen aus der Atmosphäre geschützt ist. Die aufgeführten Schritte können, müssen jedoch nicht zwangsläufig in der genannten Reihenfolge ausgeführt werden. Besonders bevorzugt werden die nachfolgend aufgeführten Schritte vorab durchgeführt. Einer dieser Schritte sieht vor, den Spulenkörper, die Korrosionsschutzkappe und eine zwischen dem Spulenkörper und der Korrosionsschutzkappe befindliche Magnetscheibe untereinander, vorzugsweise mittels eines oder mehrerer am Spulenkörper befindlichen Schnapphaken, zu einer Einheit zu verbinden. In einem weiteren Schritt wird die Spule um den Spulenkörper gewickelt.

Bevorzugt erfolgt das Herstellen des Magnetventils mit einer mittels einem Spritzgussverfahren hergestellten Korrosionsschutzkappe, wobei beim Spritzgussverfahren vorzugsweise Kunststoffe aus der Gruppe der Thermoplaste, Duroplaste und Elastomere Anwendung finden. Mittels Spritzgussverfahren hergestellte Bauteile können besonders genau und kostengünstig hergestellt werden. Die Korrosionsschutzkappe kann folglich besonders dünnwandig ausgeführt sein. Besonders bevorzugt weist die Korrosionsschutzkappe eine Wandstärke von 1mm oder weniger auf.

Eine bevorzugte Ausführungsform der Erfindung sowie weitere vorteilhafte Ausgestaltungen werden anhand der begleitenden Zeichnung näher erläutert. Es zeigen:
- Fig. 1: ein Magnetventil mit einer Korrosionsschutzkappe schematisch in einer Schnittdarstellung,
- Fig. 2: das Magnetventil mit einer Steckverbindung umfassenden Korrosionsschutzkappe schematisch in einer Schnittdarstellung und
- Fig. 3: ein Magnetventil nach dem Stand der Technik.

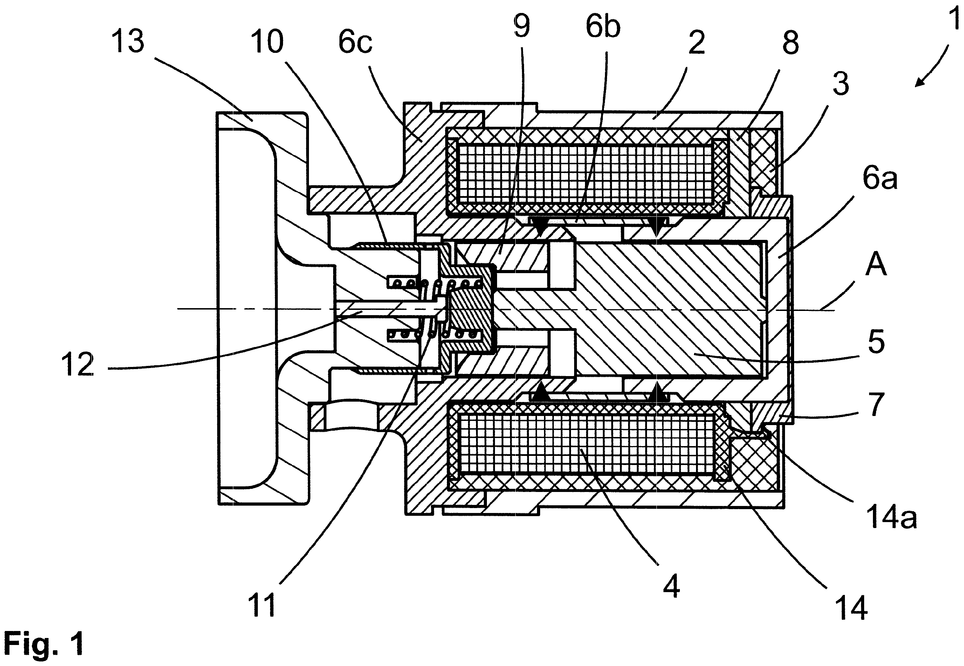

In Fig. 1 ist ein erfindungsgemäßes Magnetventil 1, insbesondere für einen elektrisch kontinuierlich verstellbaren Stoßdämpfer eines Fahrzeugs, in einer bevorzugten Ausführungsform dargestellt. Das Magnetventil 1 weist eine in einem Ventilgehäuse 2 mittels einer Vergussmasse 3 vergossene, elektrisch bestrombare Spule 4 auf. Als Vergussmasse 3 kann beispielsweise ein Zwei-Komponenten-Polyurethankleber Anwendung finden. Es sind jedoch auch andere Kunststoffe als Vergussmasse 3 geeignet. Das Magnetventil 1 umfasst darüber hinaus einen bezüglich einer Längsachse A der Spule 4 beweglich gelagerten Magnetanker 5, welcher zumindest teilweise von einem dreiteiligen Polrohr 6a, 6b, 6c umgeben ist. Das Polrohr 6a, 6b, 6c umfasst ein Endstück 6a, eine Hülse 6b und eine Patrone 6c. Die Hülse 6b ist mit dem Endstück 6a und der Patrone 6c verschweißt. Das Polrohr 6a, 6b, 6c ist seinerseits zumindest teilweise von einem Spulenkörper 14 der Spule 4 umgeben.

Bei Bestromung der Spule 4 bildet sich ein durch das Polrohr 6a, 6b, 6c und eine Magnetscheibe 8 und das Gehäuse 2 verlaufender magnetischer Kreis in der dem Fachmann geläufigen Weise aus und führt zu einer axialen Verschiebung des Magnetankers 5. Das Endstück 6a und die Patrone 6c des Polrohrs sowie die sich im Ventilgehäuse 2 befindliche Magnetscheibe 8 sind aus einem korrosionsfähigen metallischen Werkstoff gefertigt. Demzufolge weisen das Endstück 6a und die Patrone 6c des Polrohrs 6a, 6b, 6c sowie die Magnetscheibe 8 besonders gute magnetische Eigenschaften auf.

Das erfindungsgemäße Magnetventil 1 umfasst ferner eine Korrosionsschutzkappe 7. Der Spulenkörper 14 und die Korrosionsschutzkappe 7 sowie die zwischen dem Spulenkörper 14 und der Korrosionsschutzkappe 7 befindliche Magnetscheibe 8 sind mittels sich am Spulenkörper 14 befindlichen Schnapphaken 14a zu einer Einheit verbunden. Folglich lässt sich das Magnetventil 1 besonders einfach und zeitsparend montieren. Die Korrosionsschutzkappe 7 deckt ein axiales Ende des Polrohrs 6a, 6b, 6c ab und stellt mit der Vergussmasse 3 eine Verbindung her, sodass das axiale Ende des Polrohrs 6a, 6b, 6c vor Korrosionseinflüssen aus der Atmosphäre geschützt ist. Das Herstellen der Verbindung erfolgt dabei durch Aushärten der Vergussmasse 3.

Die Korrosionsschutzkappe 7 kann als Kunststoffspritzgussteil ausgeführt sein, wobei bei der Herstellung der Kappe 7 beispielsweise Kunststoffe aus der Gruppe der Thermoplaste, Duroplaste oder Elastomere zum Einsatz kommen können. Kunststoffspritzgussteile sind besonders exakt herstellbar, sodass die Korrosionsschutzkappe 7 besonders dünnwandig ausgeführt sein kann. Die Wandstärke der Kappe 7 kann beispielsweise 1mm oder weniger betragen. Erfindungsgemäß ist einerseits das axiale Ende des Polrohrs 6a, 6b, 6c durch die Korrosionsschutzkappe 7 vor Korrosionseinflüssen aus der Atmosphäre geschützt und andererseits kann das Magnetventil 1 infolge der geringen Wandstärke der Kappe 7 eine geringe axiale Baugröße aufweisen.

Um die axiale Baugröße des Ventilgehäuses 2 besonders gering zu halten, erstreckt sich darüber hinaus das mit der Korrosionsschutzkappe 7 abgedeckte Ende des Polrohres 6a, 6b, 6c in axialer Richtung über zumindest eine axiale Außenkante des Ventilgehäuses 2, bevorzugt über alle diesseitigen axialen Außenkanten des Ventilgehäuses 2 sowie über die Vergussmasse 3 hinaus.

Die Korrosionsschutzkappe 7 ist gegenüber der Vergussmasse 3 andersfarbig ausgestaltet. In einer Gruppe von erfindungsgemäßen Magnetventilen 1 sind definierte Magnetventile 1 jeweils mit einer Korrosionsschutzkappe 7 mit vorbestimmter Markierung versehen, sodass die Korrosionsschutzkappe 7 zur Kennzeichnung des jeweiligen Magnetventils 1 beiträgt und Magnetventile 1 hinsichtlich ihrer Baugröße oder anderer Kriterien unterschieden werden können. Dazu weisen vorab bestimmte Korrosionsschutzkappen 7 gegenüber anderen Korrosionsschutzkappen 7 beispielsweise eine unterschiedliche Farbgebung oder eine unterschiedliche Beschriftung mit vorab definierten Zeichen auf. Als Zeichen können Buchstaben, Zahlen und dergleichen Anwendung finden. Die Zeichen können dabei in jeglicher dem Fachmann geläufigen Weise, insbesondere durch Laserbeschriftung oder Prägung, auf die Korrosionsschutzkappen aufgebracht werden.

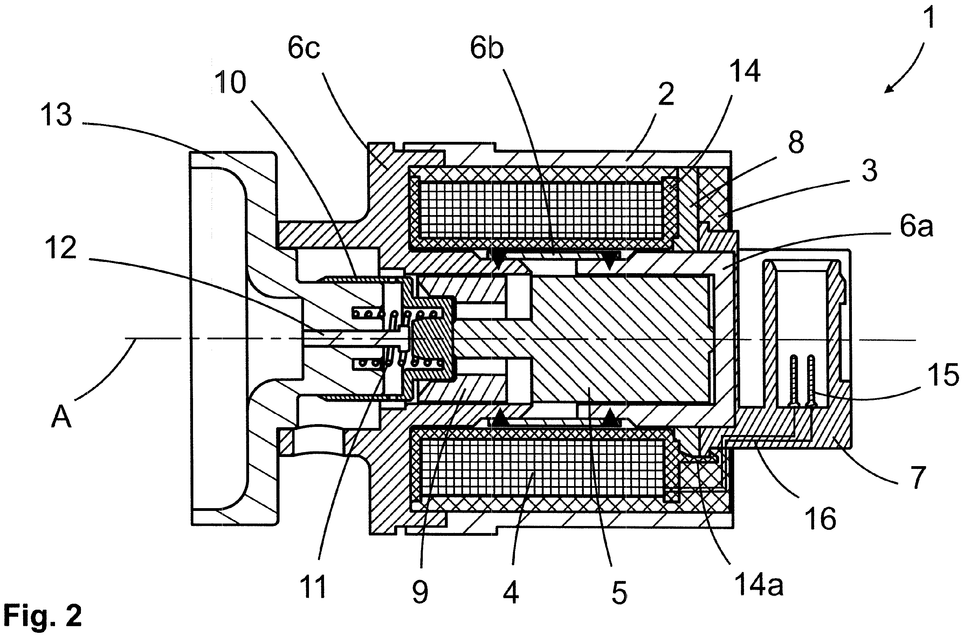

Fig. 2 zeigt ein zweites Ausführungsbeispiel eines Magnetventils 1, welches die gleichen Bauteile wie das in Fig. 1 gezeigte Ausführungsbeispiel aufweist, im Gegensatz dazu jedoch eine besondere Korrosionsschutzkappe 7 umfasst. Die Korrosionsschutzkappe 7 des in Fig. 2 dargestellten Magnetventils 1 weist einen mit der Spule 4 elektrisch verbundenen ersten Teil einer elektrischen Steckverbindung auf, welcher dazu eingerichtet ist einen zugehörigen zweiten Teil der elektrischen Steckverbindung aufzunehmen, sodass zwischen der Spule 4 und einer externen Spannungsquelle eine Verbindung hergestellt werden kann, um die Spule 4 elektrisch zu bestromen. Dieser erste Teil der elektrischen Steckverbindung kann, wie hier, ein Einbaustecker mit in radialer Richtung nach außen weisenden Kontaktstiften 15 sein, der auch als "männlicher Teil" der elektrischen Steckverbindung bekannt ist. Entsprechend ist der zweite Teil der elektrischen Steckverbindung eine Kupplung mit nach innen weisenden Kontaktöffnungen, wobei dies auch als "weiblicher Teil" der elektrischen Steckverbindung bekannt ist. "Weiblicher Teil" und "männlicher Teil" können auch vertauscht sein, und es sind auch andere Steckverbindungen oder überhaupt andere Anschlusstypen möglich. Zwischen den Kontaktstiften 15 und der Spule 4 bestehende elektrische Verbindungsleitungen 16 verlaufen innerhalb der Korrosionsschutzkappe 7 in etwa z-förmig oder s-förmig, treten in radialer Richtung aus der Korrosionsschutzkappe 7 aus und sind nach dem Austritt bis zur Spule 4 vollständig mit der Vergussmasse 3 vergossen.

Dadurch sind einerseits die genannten Leitungen 16 gegen Beschädigungen geschützt und andererseits übernimmt die Korrosionsschutzkappe 7 zusätzlich die Verbindung zur Spannungsquelle.

Das Magnetventil 1 gemäß dem Ausführungsbeispiel nach Fig. 1 oder Fig. 2 kann beispielsweise mit folgenden Verfahrensschritten in der aufgeführten oder in anderer Reihenfolge gefertigt werden:
Ein Verfahrensschritt sieht das Verschweißen der Teile des Polrohres 6a; 6b; 6c vor. Dabei wird die Hülse 6b mit der Patrone 6c und dem Endstück 6a, welches das axiale Ende des Polrohres 6a, 6b, 6c umfasst, verschweißt. Ein weiterer Schritt sieht das Vormontieren des Spulenkörpers 14 mit der Korrosionsschutzkappe 7 und der sich zwischen dem Spulenkörper 14 und der Korrosionsschutzkappe 7 befindlichen Magnetscheibe 8 vor, so dass sie eine selbständig handhabbare Einheit bilden. Die Vormontage wird vorteilhaft mittels ein oder mehrerer sich am Spulenkörper 14 befindlicher Schnapphaken 14a realisiert. Dazu wird der Magnetring 8 mit einer axialen Seite an die Korrosionsschutzkappe 7 angelegt und derart ausgerichtet, dass die Schnapphaken 14a durch Öffnungen im Magnetring 8 hindurch bis in eine Endstellung geführt werden, in welcher die Schnapphaken 14a eine Hinterschneidung der Korrosionsschutzkappe 7 derart umgreifen, dass der Spulenkörper 14, die Magnetscheibe 8 und die Korrosionsschutzkappe 7 fest miteinander verbunden sind. Ein weiterer Verfahrensschritt sieht das Wickeln der Spule 4 auf dem Spulenkörper 14 der vormontierten Einheit vor. In einem weiteren Schritt werden die genannte Einheit und das verschweißte Polrohr 6a, 6b, 6c axial in das Ventilgehäuse 2 eingeführt. Die genannte Einheit wird dabei so angeordnet, dass der Spulenkörper 14 das Polrohr 6a, 6b, 6c zumindest teilweise umgibt und die Korrosionsschutzkappe 7 das Polrohr 6a an einem axialen Ende so abdeckt, dass dieses Ende vor Korrosionseinflüssen aus der Atmosphäre geschützt ist. Ein weiterer Schritt sieht vor, die Spule 4 durch eine axiale Öffnung der Magnetscheibe 8 hindurch mit einer Vergussmasse 3 zu vergießen. Dabei werden mit der Vergussmasse 3 auch die Magnetscheibe 8 und die das axiale Ende des Polrohrs 6a, 6b, 6c abdeckende Korrosionsschutzkappe 7 vergossen, sodass zwischen der Korrosionsschutzkappe 7 und der Vergussmasse 3 eine Verbindung besteht und das axiale Ende des Polrohres 6a, 6b, 6c dauerhaft vor Korrosionseinflüssen aus der Atmosphäre geschützt ist. Die Verbindung wird durch Aushärten der Vergussmasse 3 hergestellt. In einem weiteren Schritt wird der Magnetanker 5 in das Polrohr 6a, 6b, 6c eingesetzt und ein Pressteil 9 in die Patrone 6c eingepresst. Anschließend wird in die Patrone 6c ein Schieber 10 eingesetzt, wobei der Schieber 10 dabei an das Pressteil 9 angrenzt. Nach dem Einsetzen eines Kolbens 12 in einen Ventilkörper 13 erfolgt ein Einsetzen einer Feder 11 in den Schieber 10. Alternativ kann die Feder 11 auch in den Ventilkörper 13 eingesetzt werden. Abschließend erfolgt ein Aufpressen der Patrone 6c auf den Ventilkörper 13.

## Patentansprüche

1. Magnetventil (1), insbesondere für elektrisch kontinuierlich verstellbare Stoßdämpfer eines Fahrzeugs, umfassend:
- eine in einem Ventilgehäuse (2) mittels einer Vergussmasse (3) vergossene, elektrisch bestrombare Spule (4) mit einem Spulenkörper (14),
- ein bezüglich einer Längsachse (A) der Spule (4) beweglich gelagerter Magnetanker (5), und
- ein den Magnetanker (5) zumindest teilweise umgebendes Polrohr (6a; 6b; 6c), welches zumindest teilweise von dem Spulenkörper (14) umgeben ist, **dadurch gekennzeichnet, dass** eine mit der Vergussmasse (3) verbundene Korrosionsschutzkappe (7) das Polrohr (6a) an einem axialen Ende so abdeckt, dass dieses Ende vor Korrosionseinflüssen aus der Atmosphäre geschützt ist.

2. Magnetventil (1) nach Anspruch 1, **dadurch gekennzeichnet, dass** sich das mit der Korrosionsschutzkappe (7) abgedeckte Ende des Polrohres (6a) in axialer Richtung über die Vergussmasse (3) hinaus erstreckt.

3. Magnetventil (1) nach Anspruch 1 oder 2, **dadurch gekennzeichnet, dass** sich das mit der Korrosionsschutzkappe (7) abgedeckte Ende des Polrohres (6a) in axialer Richtung über eine axiale Außenkante des Ventilgehäuses (2) hinaus erstreckt.

4. Magnetventil (1) nach einem der Ansprüche 1 bis 3, **dadurch gekennzeichnet, dass** die Korrosionsschutzkappe (7) Kunststoff aufweist, insbesondere ausgewählt aus der Gruppe der Thermoplaste, Duroplaste und Elastomere.

5. Magnetventil (1) nach einem der Ansprüche 1 bis 4, **dadurch gekennzeichnet, dass** die Korrosionsschutzkappe (7) ein Kunststoffspritzgussteil ist.

6. Magnetventil (1) nach einem der Ansprüche 1 bis 5, **dadurch gekennzeichnet, dass** die Korrosionsschutzkappe (7) gegenüber der Vergussmasse (3) andersfarbig ausgestaltet ist.

7. Magnetventil (1) nach einem der Ansprüche 1 bis 6, **dadurch gekennzeichnet, dass** der Spulenkörper (14) und die Korrosionsschutzkappe (7) sowie eine zwischen dem Spulenkörper (14) und der Korrosionsschutzkappe (7) befindliche Magnetscheibe (8) untereinander, vorzugsweise mittels eines oder mehreren Schnapphaken (14a), zu einer Einheit verbunden sind.

8. Magnetventil (1) nach einem der Ansprüche 1 bis 7, **dadurch gekennzeichnet, dass** die Korrosionsschutzkappe (7) einen elektrischen Steckverbindungsanschluss umfasst, der mit der Spule (4) elektrisch leitend verbunden ist, um zwischen der Spule (4) und einer externen Spannungsquelle eine elektrische Verbindung herzustellen.

9. Verfahren zur Herstellung eines Magnetventils (1), insbesondere für elektrisch kontinuierlich verstellbare Stoßdämpfer eines Fahrzeugs, umfassend die Schritte in der folgenden oder in anderer Reihenfolge: - Einführen eines Polrohrs (6a; 6b; 6c) und einer Spule (4) mit einem Spulenkörper (14) in ein Ventilgehäuse (2), wobei der Spulenkörper (14) das Polrohr (6a; 6b; 6c) zumindest teilweise umgibt,
- Vergießen der Spule (4) und des Spulenkörpers (14) mit einer Vergussmasse (3), und
- Abdecken eines axialen Endes des Polrohres (6a) mit einer Korrosionsschutzkappe (7) derart, dass zwischen der Vergussmasse (3) und der Korrosionsschutzkappe (7) eine Verbindung hergestellt wird und das axiale Ende des Polrohres (6a) vor Korrosionseinflüssen aus der Atmosphäre geschützt ist.

10. Verfahren nach Anspruch 9, **dadurch gekennzeichnet, dass** das Verfahren die nachfolgenden vorab durchzuführenden Schritte umfasst:
- Verbinden des Spulenkörpers (14) mit der Korrosionsschutzkappe (7) und einer zwischen dem Spulenkörper (14) und der Korrosionsschutzkappe (7) befindlichen Magnetscheibe (8), vorzugsweise mittels ein oder mehrerer am Spulenkörper (14) befindlicher Schnapphaken (14a), zu einer Einheit und
- Wickeln der Spule (4) auf dem Spulenkörper (14).

11. Verfahren nach einem der Ansprüche 9 oder 10, **dadurch gekennzeichnet, dass** die Korrosionsschutzkappe (7) mittels eines Spritzgussverfahrens hergestellt wird, wobei Kunststoff zum Einsatz kommt, insbesondere ausgewählt aus der Gruppe der Thermoplaste, Duroplaste und Elastomere.

12. Verwendung eines Magnetventils (1) nach einem der Ansprüche 1 bis 8 oder eines nach einem der Ansprüche 9 bis 11 hergestellten Magnetventils (1) in einem elektrisch kontinuierlich verstellbaren Stoßdämpfer eines Fahrzeuges.

13. Gruppe von Magnetventilen (1) nach einem der Ansprüche 1 bis 8 oder von nach einem der Ansprüche 9 bis 11 hergestellten Magnetventilen (1), **dadurch gekennzeichnet, dass** die den Magnetventilen (1) der Gruppe von Magnetventilen (1) zugehörigen Korrosionsschutzkappen (7) unterschiedlich gekennzeichnet sind.

14. Gruppe nach Anspruch 13, **dadurch gekennzeichnet, dass** die unterschiedliche Kennzeichnung der Korrosionsschutzkappen (7) durch unterschiedliche Beschriftung und/oder durch unterschiedliche Farbgebung der Korrosionsschutzkappen (7) ausgeführt ist.

15. Verwendung eines Magnetventils (1) mit einer Korrosionsschutzkappe (7)
nach einem der Ansprüche 1 bis 8 oder eines nach einem der Ansprüche 9 bis 11 hergestellten Magnetventils (1) zur Kennzeichnung des Magnetventils (1) in einer Gruppe von Magnetventilen (1) mit jeweils einer unterschiedlich gekennzeichneten Korrosionsschutzkappe (7).

## Claims

1. A magnetic valve (1), in particular for electrically continuously adjustable shock absorbers of a vehicle, comprising:
- an electrically energizable coil (4) which has a coil body (14) and is cast in a valve housing (2) by means of a casting compound (3),
- a magnetic armature (5) movably supported relative to a longitudinal axis (A) of the coil (4), and
- a pole tube (6a; 6b; 6c) which at least partially surrounds the magnetic armature (5) and is at least partially surrounded by the coil body (14), **characterized in that** a corrosion protection cap (7) connected to the casting compound (3) covers the pole tube (6a) at one axial end such that this end is protected against corrosion influences from the atmosphere.

2. The magnetic valve (1) according to claim 1, **characterized in that** the end of the pole tube (6a) covered with the corrosion protection cap (7) extends in the axial direction beyond the casting compound (3).

3. The magnetic valve (1) according to claim 1 or 2, **characterized in that** the end of the pole tube (6a) covered with the corrosion protection cap (7) extends in the axial direction beyond an axial outer edge of the valve housing (2).

4. The magnetic valve (1) according to any of claims 1 to 3, **characterized in that** the corrosion protection cap (7) has plastic, in particular selected from the group of thermoplastics, thermosets and elastomers.

5. The magnetic valve (1) according to any of claims 1 to 4, **characterized in that** the corrosion protection cap (7) is a plastic injection-molded part.

6. The magnetic valve (1) according to any of claims 1 to 5, **characterized in that** the corrosion protection cap (7) is designed in a different color than the casting compound (3).

7. The magnetic valve (1) according to any of claims 1 to 6, **characterized in that** the coil body (14) and the corrosion protection cap (7) as well as a magnetic disk (8) located between the coil body (14) and the corrosion protection cap (7) are connected to each another, preferably by means of one or several snap hooks (14a), to form a unit.

8. The magnetic valve (1) according to any of claims 1 to 7, **characterized in that** the corrosion protection cap (7) comprises an electrical plug connection terminal which is connected electroconductively to the coil (4) in order to establish an electrical connection between the coil (4) and an external voltage source.

9. A method for manufacturing a magnetic valve (1), in particular for electrically continuously adjustable shock absorbers of a vehicle, comprising the steps in the following or in a different order:
- inserting a pole tube (6a; 6b; 6c) and a coil (4) having a coil body (14) into a valve housing (2), wherein the coil body (14) at least partially surrounds the pole tube (6a; 6b; 6c),
- casting the coil (4) and the coil body (14) with a casting compound (3), and
- covering an axial end of the pole tube (6a) with a corrosion protection cap (7) in such a way that a connection is established between the casting compound (3) and the corrosion protection cap (7) and the axial end of the pole tube (6a) is protected against corrosion influences from the atmosphere.

10. The method according to claim 9, **characterized in that** the method comprises the following steps to be performed in advance:
- connecting the coil body (14) to the corrosion protection cap (7) and to a magnetic disk (8) located between the coil body (14) and the corrosion protection cap (7), preferably by means of one or several snap hooks (14a) located at the coil body (14), to form a unit, and
- winding the coil (4) on the coil body (14).

11. The method according to any of claims 9 or 10, **characterized in that** the corrosion protection cap (7) is manufactured by means of an injection molding method, wherein plastic is utilized, in particular selected from the group of thermoplastics, thermosets and elastomers.

12. A use of a magnetic valve (1) according to any of claims 1 to 8 or of a magnetic valve (1) manufactured according to any of claims 9 to 11 in an electrically continuously adjustable shock absorber of a vehicle.

13. A group of magnetic valves (1) according to any of claims 1 to 8 or of magnetic valves (1) manufactured according to any of claims 9 to 11, **characterized in that** the corrosion protection caps (7) associated with the magnetic valves (1) of the group of magnetic valves (1) are marked differently.

14. The group according to claim 13, **characterized in that** the different markings of the corrosion protection caps (7) are realized by different inscriptions and/or a different coloring of the corrosion protection caps (7).

15. A use of a magnetic valve (1) with a corrosion protection cap (7) according to any of claims 1 to 8 or of a magnetic valve (1) manufactured according to any of claims 9 to 11 for marking the magnetic valve (1) in a group of magnetic valves (1) with a respectively differently marked corrosion protection cap (7).

## Revendications

1. Vanne magnétique (1), en particulier pour amortisseurs électriquement réglables en continu d'un véhicule, comprenant :
- une bobine (4) apte à être alimentée en courant électrique, moulée dans un boîtier de vanne (2) au moyen d'une masse de moulage (3), ayant un corps de bobine (14),
- un induit magnétique (5) monté en mobilité par rapport à l'axe longitudinal (A) de la bobine (4),
- un tube polaire (6a; 6b; 6c) entourant au moins partiellement l'induit magnétique (5) et entouré au moins partiellement par le corps de bobine (14),
**caractérisée en ce qu'**un capuchon de protection anticorrosion (7) joint à la masse de moulage (3) recouvre de telle façon le tube polaire (6a) à une extrémité axiale que cette extrémité est protégée contre des influences corrosives de l'atmosphère.

2. Vanne magnétique (1) selon la revendication 1, **caractérisée en ce que** l'extrémité du tube polaire (6a) recouverte par le capuchon de protection anticorrosion (7) s'étend en direction axiale au-delà de la masse de moulage (3).

3. Vanne magnétique (1) selon la revendication 1 ou 2, **caractérisée en ce que** l'extrémité du tube polaire (6a) recouverte par le capuchon de protection anticorrosion (7) s'étend en direction axiale au-delà d'un bord extérieur axial du boîtier de vanne (2).

4. Vanne magnétique (1) selon une des revendications de 1 à 3, **caractérisée en ce que** le capuchon de protection anticorrosion (7) comporte de la matière plastique, en particulier choisie parmi le groupe des thermoplastiques, duroplastiques et élastomères.

5. Vanne magnétique (1) selon une des revendications de 1 à 4, **caractérisée en ce que** le capuchon de protection anticorrosion (7) est une pièce en matière plastique moulée par injection.

6. Vanne magnétique (1) selon une des revendications de 1 à 5, **caractérisée en ce que** le capuchon de protection anticorrosion (7) est réalisé en une autre couleur que la masse de moulage (3).

7. Vanne magnétique (1) selon une des revendications de 1 à 6, **caractérisée en ce que** le corps de bobine (14) et le capuchon de protection anticorrosion (7) ainsi qu'un disque magnétique (8) se trouvant entre le corps de bobine (14) et le capuchon de protection anticorrosion (7) sont joints entre eux, de préférence au moyen d'un ou de plusieurs crochets à déclic (14a), de manière à former une unité.

8. Vanne magnétique (1) selon une des revendications de 1 à 7, **caractérisée en ce que** le capuchon de protection anticorrosion (7) comprend un raccord de connexion électrique enfichable qui est connecté de manière électriquement conductrice à la bobine (4) afin d'établir une connexion électrique entre la bobine (4) et une source externe de tension.

9. Procédé de fabrication d'une vanne magnétique (1), en particulier pour amortisseurs électriquement réglables en continu d'un véhicule, comprenant les étapes dans l'ordre suivant ou dans un autre ordre :
- introduction d'un tube polaire (6a; 6b; 6c) et d'une bobine (4) ayant un corps de bobine (14) dans un boîtier de vanne (2), cependant que le corps de bobine (14) entoure au moins partiellement le tube polaire (6a; 6b; 6c),
- moulage de la bobine (4) et du corps de bobine (14) avec une masse de moulage (3), et
- recouvrement d'une extrémité axiale du tube polaire (6a) avec un capuchon de protection anticorrosion (7), de telle façon que, entre la masse de moulage (3) et le capuchon de protection anticorrosion (7), une jonction est créée et l'extrémité axiale du tube polaire (6a) est protégée contre des influences corrosives de l'atmosphère.

10. Procédé selon la revendication 9, **caractérisée en ce que** procédé comprend les étapes suivantes à exécuter préalablement :
- jonction du corps de bobine (14) et du capuchon de protection anticorrosion (7) ainsi que d'un disque magnétique (8) se trouvant entre le corps de bobine (14) et le capuchon de protection anticorrosion (7), de préférence au moyen d'un ou de plusieurs crochets à déclic (14a) se trouvant au corps de bobine (14), de manière à former une unité, et
- enroulement de la bobine (4) sur le corps de bobine (14).

11. Procédé selon une des revendications 9 ou 10 **caractérisée en ce que** le capuchon de protection anticorrosion (7) est fabriqué au moyen d'un procédé de moulage par injection, cependant que de la matière plastique est mise en œuvre, en particulier choisie parmi le groupe des thermoplastiques, duroplastiques et élastomères.

12. Utilisation d'une vanne magnétique (1) selon une des revendications de 1 à 8 ou d'une vanne magnétique (1) fabriquée selon une des revendications de 9 à 11 dans un amortisseur électriquement réglable en continu d'un véhicule.

13. Groupe de vannes magnétiques (1) selon une des revendications de 1 à 8 ou de vannes magnétiques (1) fabriquées selon une des revendications de 9 à 11, **caractérisé en ce que** les capuchons de protection anticorrosion (7) appartenant aux vannes magnétiques (1) du groupe des vannes magnétiques (1) sont marqués différemment.

14. Groupe selon la revendication 13, **caractérisé en ce que** le marquage différent des capuchons de protection anticorrosion (7) est obtenu par inscription différente et/ou par coloration différente des capuchons de protection anticorrosion (7).

15. Utilisation d'une vanne magnétique (1) ayant un capuchon de protection anticorrosion (7) selon une des revendications de 1 à 8 ou d'une vanne magnétique (1) fabriquée selon une des revendications de 9 à 11 pour le marquage de la vanne magnétique (1) dans un groupe des vannes magnétiques (1) avec respectivement un capuchon de protection anticorrosion (7) marqué différemment.
